# EUROPEAN PATENT SPECIFICATION

(11) **EP 3 778 189 B1**
(45) Date of publication and mention of the grant of the patent: **17.07.2024**
(21) Application number: 18911409.3
(22) Date of filing: 25.05.2018
(51) Int. Cl.: B29C 63/04, B29C 63/00, F16L 59/065, B65B 31/00, B65B 11/48, B65B 11/54, B65B 31/04, B65B 51/14

(54) **METHOD OF PACKING VACUUM INSULATION MATERIAL**
VERFAHREN ZUM VERPACKEN VON VAKUUMISOLATIONSMATERIAL
PROCÉDÉ D'EMBALLAGE DE MATÉRIAU D'ISOLATION SOUS VIDE

(30) Priority: 26.03.2018 KR 20180034607
(43) Date of publication of application: 17.02.2021
(73) Proprietor: OCI Company Ltd., Seoul 04532 (KR)
(72) Inventor: KIM, Hyun Cheol, Iksan-Si, Jeollabuk-do 54588 (KR); YOON, Jin Ho, Iksan-Si, Jeollabuk-do 54588 (KR); LEE, Seung Yeon, Seongnam-Si, Gyeonggi-do 13212 (KR); JUNG, Young Soo, Seongnam-Si, Gyeonggi-do 13212 (KR)
(74) Representative: Cabinet Beau de Loménie
(86) International application number: PCT/KR2018/005942
(87) International publication number: WO 2019/189995

(56) References cited:
- JP-A- H11 141 796
- KR-A- 20130 114 361
- KR-A- 20130 114 361
- KR-A- 20170 047 955
- KR-B1- 101 233 353
- KR-B1- 101 233 353
- US-A1- 2002 018 872
- US-B2- 6 863 949

## Description

### [Technical Field]

The present invention relates to a method of packaging a vacuum insulation panel and, more particularly, to a method of folding remaining airtight foil over upper and lower surfaces of a core wrapped in an airtight foil.

### [Background Art]

A vacuum insulation panel is an insulation material that is fabricated by wrapping a porous core in many layers of thin film, followed by reducing the internal pressure and sealing. Since thermal conductivity of a gas is nearly zero, such a vacuum insulation panel has good thermal insulation performance. In general, vacuum insulation panels are used to provide thermal insulation to home appliances, temperature-controlled packaging for transportation of medicines for bio-heath care and the like, buildings, and other devices. The vacuum insulation panel can prevent heat loss by eliminating potential heat transfer media through reduction in internal pressure and seal-packaging. Accordingly, how the vacuum insulation panel is packaged is an important factor in maintaining insulation performance for a long time.

In typical vacuum insulation panel packaging methods, there is a problem of formation of a level difference (that is, a step) between folded planes of an airtight wrapper on upper and lower surfaces of the core. Accordingly, when several vacuum insulation panels fabricated in this way are connected to fabricate an insulation wall, thermal bridging occurs in a gap at junctions between the vacuum insulation panels. Thermal bridging can cause poor thermal insulation performance of the fabricated insulation wall and thus excessive energy consumption. In addition, in the case of construction, thermal bridging can cause a problem such as construction misalignment or a difference between actual consumption and planned consumption.

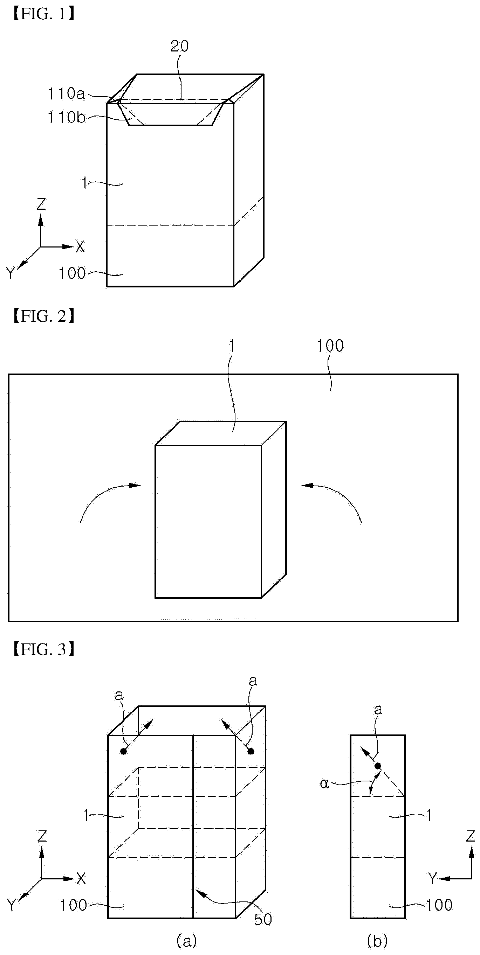

Moreover, typical vacuum insulation panel packaging methods have a problem in that it is difficult to form upper and lower folding lines at regular locations. For example, the upper and lower folding lines are formed on the upper and lower surfaces of the core, as shown in FIG. 1. That is, such typical vacuum insulation panel packaging methods have difficulty in preventing formation of a step on the upper and lower surfaces of the core.

US2002/018872 discloses a method of packaging a core comprising wrapping the core in a foil, forming side folding lines and corresponding folding planes over surfaces of the core and sealing the folding planes.

KR 101233353 discloses a method of packaging a vacuum insulation material comprising wrapping a core material in a foil, forming side folding lines and corresponding folding planes over surfaces of the core and sealing the folding planes.

KR 20130114361 discloses a sealing packing machine and method for covering a food container with a sealed foil.

### [Disclosure]

### [Technical Problem]

It is one aspect of the present invention to provide a method of folding remaining airtight foil over upper and lower surfaces of a core wrapped in the airtight foil without leaving a step on the upper and lower surfaces of the core.

### [Technical Solution]

In accordance with an aspect of the present invention, there is provided a method of packaging a vacuum insulation panel, including: (a) wrapping a core in an airtight foil such that upper and lower surfaces of the core are open; (b) forming a side folding line and two corresponding folding planes with reference to the side folding line by pushing remaining airtight foil over the upper and lower surfaces of the core wrapped in the airtight foil inwardly of the upper and lower surfaces of the core from both sides of the core, the side folding line being formed using a jig, the jig being guided along side surfaces of the core such that at least a portion of the jig contacts the upper surface of the core to stop movement of at least one of the jig and the core while at least another portion of the jig contacts the airtight foil to form the side folding line; (c) bringing the upper and lower surfaces of the core into close contact with a step member; (d) folding and pressing the folding planes of the airtight foil protruding between the step member and the upper and lower surfaces of the core onto the step member; and (e) sealing the folding planes using a thermal bonding member, in accordance with claim 1.

### [Advantageous Effects]

The method according to the present invention can prevent formation of a step on upper and lower surfaces of a core and formation of a gap at junctions between multiple vacuum insulation panels, thereby reducing thermal bridging in an insulation wall fabricated using the vacuum insulation panels and improving insulation performance of the insulation wall while allowing easy prediction of the quantity of vacuum insulation panels required for a construction project.

### [Description of Drawings]

FIG. 1 is a view of a vacuum insulation panel fabricated by a typical method known in the art.
FIG. 2 is a view illustrating a configuration according to one embodiment in which a core is wrapped in an airtight foil.
FIG. 3 is a view illustrating a configuration according to one embodiment of the present invention, in which remaining airtight foil over the upper and lower surfaces of the core is pushed inwards from both sides of the core.
FIG. 4 is a view illustrating a configuration in which remaining airtight foil over the upper/lower surface of the core is pushed to form a folding line.
FIG. 5 is a view illustrating a configuration according to one embodiment of the present invention, in which the upper surface of the vacuum insulation panel is brought into close contact with a step member.
FIG. 6 is a view illustrating a configuration according to one embodiment of the present invention, in which a front surface of the core is secured by a first securing member and remaining airtight foil over the upper and lower surfaces of the core is flipped onto the step member.
FIG. 7 is a view illustrating a configuration in which remaining airtight foil over the upper and lower surfaces of the core is secured by a second securing member after being flipped, as shown in FIG. 6
FIG. 8 is a view illustrating a configuration in which remaining airtight foil over the upper and lower surfaces of the core is thermally bonded after being secured, as shown in FIG. 7.
FIG. 9 is a view illustrating a configuration in which the airtight foil thermally bonded as shown in FIG. 8 is cut at a predetermined location.
FIG. 10 is a view illustrating a configuration in which remaining airtight foil over the upper/lower surface of the core is flipped onto the front surface of the core after being cut as shown in FIG. 9.
FIG. 11 is a perspective view of the configuration of FIG. 10(b).
FIG. 12 is a view of a vacuum insulation panel packaged according to one embodiment of the present invention.
FIG. 13 to FIG. 15 are views of a jig according to one embodiment of the present invention.

### [Best Mode]

Hereinafter, embodiments of the present invention will be described in detail. It should be understood that the present invention is not limited to the following embodiments and may be embodied in different ways within the scope of the claims, and that the embodiments are provided for complete disclosure and thorough understanding of the present invention by those skilled in the art.

It will be understood that when an element such as a layer, film, region or substrate is referred to as being placed "on" or "under" another element, it can be directly placed on the other element, or intervening layer(s) may also be present. In addition, spatially relative terms, such as "upper" and "lower", are defined from the observer's point of view, and, when the observer's point of view is changed, "upper (portion)" may mean "lower (portion)", or vice versa.

It will be noted that like components will be denoted by like reference numerals throughout the specification and the accompanying drawings. In addition, it will be understood that the terms "includes", "comprises", "including", and/or "comprising" when used in this specification, specify the presence of stated features, steps, operations, elements, and/or components, but do not preclude the presence or addition of one or more other features, steps, operations, elements, components, and/or groups.

In the following description, the x-axis direction in the coordinate system shown in FIG. 3(a) corresponds to a rightward/leftward direction (a positive direction on the x-axis when viewed from the origin is the rightward direction), the y-axis direction corresponds to a forward/rearward direction (a positive direction on the y-axis when viewed from the origin is the forward direction), and the z-axis direction corresponds to an upward/downward direction (a positive direction on the z-axis when viewed from the origin is the upward direction).

In addition, the x-y plane in the coordinate system shown in FIG. 3(a) corresponds to an upper/lower surface of a core, the y-z plane corresponds to a side surface of the core, and the z-x plane corresponds to a front/back surface of the core. Here, the upper/lower surface may refer to at least one of the upper and lower surfaces, wherein a plane in the positive direction on the z-axis when viewed from the origin corresponds to the upper surface. Here, the core has multiple side surfaces, and the side surface may refer to at least one of the side surfaces. The front/back surface may refer to at least one of the front and back surfaces, wherein a plane in the positive direction on the y-axis when viewed from the origin corresponds to the front surface.

Hereinafter, exemplary embodiments of the present invention will be described in detail with reference to the accompanying drawings.

FIG. 1 is a view of a vacuum insulation panel packaged by a typical method known in the art.

Referring to FIG. 1, typically, a vacuum insulation panel is packaged by wrapping a core 1 in an airtight foil 100.

In the related art, there have been attempts to fold remaining airtight foil 100 over an upper/lower surface of the core 1 in various ways. However, there is a problem of leaving a step on the upper/lower surface of the core 1. In some cases, whether a step is formed on the upper/lower surface of the core 1 depends on where an upper/lower folding line of the airtight foil 100 is formed.

For example, when the vacuum insulation panel is packaged by a typical method known in the art, the upper/lower folding line 20 is always formed on the upper/lower surface of the core 1, and thus a step is always formed on the upper/lower surface of the core 1.

For example, when the vacuum insulation panel is packaged by another method known in the art, the upper/lower folding line is not formed at a regular location and a step is frequently formed on the upper/lower surface of the core 1.

That is, typical methods known in the art have a problem in that a flexible airtight foil 100 is not folded at a regular location and the upper/lower folding line 20 is formed on the upper/lower surface of the core 1 as shown in FIG. 1, resulting in formation of a step on the upper/lower surface of the core 1.

Accordingly, when the vacuum insulation panel is packaged by the methods known in the related art, there is a problem in that a gap is formed at junctions between multiple vacuum insulation panels, causing deterioration in insulation performance of an insulation wall fabricated by connecting the vacuum insulation panels.

Accordingly, the inventors of the present invention developed a method of packaging a vacuum insulation panel described below based on repeated experiments to solve such a problem in the art, that is, formation of a step on the upper/lower surface of the core 1 of a packaged vacuum insulation panel.

FIG. 2 is a view illustrating a configuration according to one embodiment in which a core is wrapped in an airtight foil.

A method of packaging a vacuum insulation panel described below is a method of fabricating a vacuum insulation panel by wrapping a core 1 in an airtight foil 100, followed by creation of vacuum, wherein the vacuum insulation panel includes the core 1 and the airtight foil 100.

The core 1 may include any material that can provide thermal insulation, for example, pearlite, polystyrene, polyurethane foam, glass wool, aerogel, precipitated silica, and fumed silica. Although the core 1 is shown as having a rectangular shape in FIG. 2, it will be understood that the present invention is not limited thereto and the core 1 may have various other polygonal shapes.

Here, the airtight foil 100 may be formed of aluminum or an aluminum-laminated synthetic resin film, and has elasticity (flexibility). The airtight foil 100 may be colorless and transparent, translucent, or opaque, or may be colored.

The dimensions of the airtight foil 100 are not particularly limited, and may be varied depending on the size of the core 1. The dimensions of the airtight foil 100 may be appropriately set to the extent that tension is applied to the airtight foil wrapped around the core 1. Although the airtight foil 100 is shown as having a band shape, it will be understood that the present invention is not limited thereto and the airtight foil 100 may have a net shape. In addition, although the airtight foil 100 is shown as being flat, it will be understood that the present invention is not limited thereto and, like a bubble wrap, the airtight foil 100 may have an uneven surface facing the front/back surface of the core 1.

Referring to FIG. 2, first, the core 1 is wrapped in the airtight foil 100 in order to fabricate the vacuum insulation panel by wrapping the core 1 in the airtight foil 100, followed by creating a vacuum.

Here, the core 1 may be wrapped in the airtight foil 100 such that the upper and lower surfaces of the core 1 are open. For example, using a band wrapping machine or the like, the airtight foil 100 may be wrapped at least one turn around the core 1, followed by bonding the airtight foil 100 to itself.

FIG. 3 is a view illustrating a configuration according to one embodiment of the present invention, in which remaining airtight foil over the upper and lower surfaces of the core is pushed inwards from both sides of the core.

Referring to FIG. 3, a front/rear junction 50 is formed in the z-axis direction on the front/back surface, for example, on the front or back surface, of the core 1 wrapped in the airtight foil 100.

Here, remaining airtight foil 100 over the upper/lower surface of the core 1 wrapped in the airtight foil 100 is pushed in an inward direction (a) of the upper/lower surface of the core 1 from both sides of the core 1.

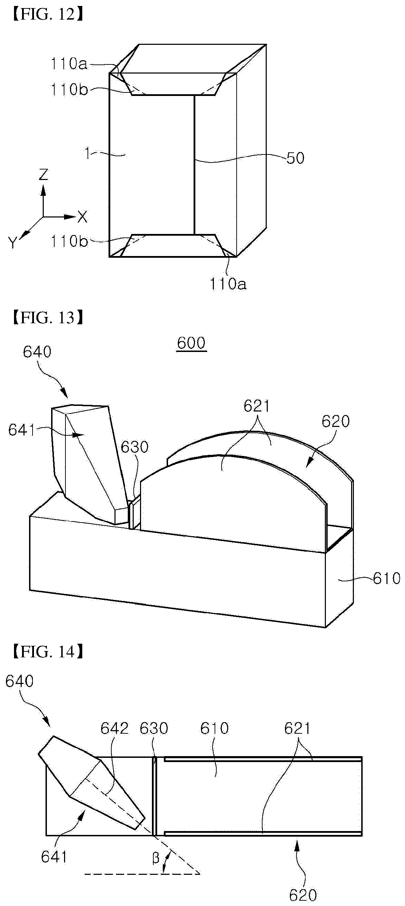

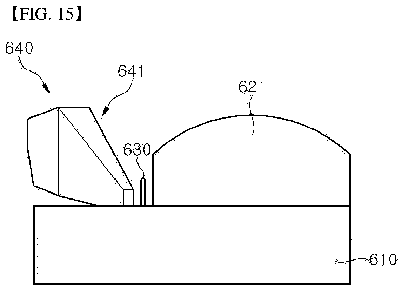

For example, using a pushing device, a jig (reference numeral 600 in FIG. 13 and FIG. 15 described below), or the like, the airtight foil 100 may be pushed in the inward direction (a) from both sides of the core 1. Here, the jig may be used for manual packaging of the vacuum insulation panel as well as continuous wrapping of a large number of cores 1 in a packaging line in a factory or the like.

That is, using the jig, the method according to the present invention can reduce an area of a folding plane 110 formed on the upper or lower surface of the core 1 or can prevent formation of the folding plane 110 on the upper or lower surface of the core 1.

For example, the airtight foil 100 may be pushed in the forward and upward directions at the same time. For example, the airtight foil 100 may be pushed inwards from both sides of the core 1 at a predetermined angle α with respect to the forward/rearward direction of the core 1.

The predetermined angle α is a two-dimensional representation of the actual three-dimensional moving direction of the airtight foil 100 which is pushed in the forward and upward directions of the core 1 at the same time, and may refer to an angle with respect to an edge of the upper surface of the core 1 when viewed from the side of the core 1.

For example, the predetermined angle α may refer to an angle of a side folding line 10 described below with respect to the edge of the upper surface of the core 1, and may also refer to an angle of the direction in which the airtight foil 100 is pushed with respect to the edge of the upper surface of the core 1 before formation of the side folding line 10. Referring to FIG. 3(b), the predetermined angle α may be, for example, greater than 0° and less than 90°, for example, greater than 0° and less than or equal to 60°. In one embodiment, the predetermined angle α may be 45°.

When the predetermined angle α falls within this range, the remaining airtight foil 100 over the upper/lower surface of the core 1 can be prevented from protruding outside the upper/lower surface of the core 1 when folded.

That is, according the present invention, through control over the angle at which the side folding line 10 is formed, the airtight foil can be prevented from unnecessarily overlapping itself on the upper/lower surface of the core 1, thereby reducing thermal bridging.

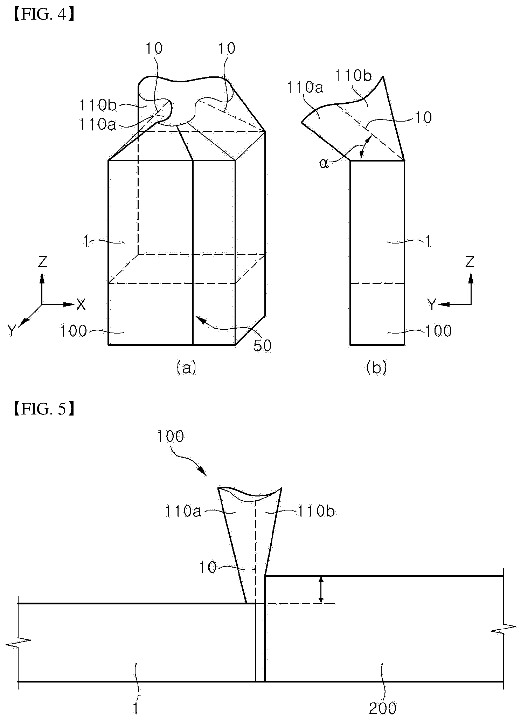

FIG. 4 is a view illustrating a configuration in which remaining airtight foil over the upper/lower surface of the core is pushed to form a folding line.

Referring to FIG. 4, as the remaining airtight foil 100 over the upper/lower surface of the core 1 wrapped in the airtight foil 100 is pushed in the inward direction (a) of the upper surface of the core 1 from the sides of the core 1, the side folding line 10 is formed.

The side folding line 10 is formed upon folding the airtight foil 100 in the inward direction (a) of the upper surface of the core 1 from the sides of the core 1. Here, two corresponding folding planes are formed with reference to the side folding line 10. That is, upon folding the remaining airtight foil 100 over the upper surface of the core 1, a pair of folding planes 110 is formed with respect to one side folding line 10, wherein the pair of folding planes 110 corresponds to each other.

The folding planes 110 are superimposed on each other with reference to the side folding line 10, as described below. Here, the expression "superimposed on each other" means that one folding plane 110 is placed on the other folding plane 110 or one folding plane 110 is located in an area of the other folding plane 110.

When the folding planes 110 are superimposed on each other on the front/back surface of the core 1, for example, on the front surface of the core 1, an upper folding plane and a lower folding plane are formed with reference to the side folding line 10. Hereinafter, the lower folding plane is referred to as a "first plane" 110a and the upper folding plane is referred to as a "second plane" 110b.

FIG. 5 is a view illustrating a configuration according to one embodiment of the present invention, in which the upper surface of the vacuum insulation panel is brought into close contact with a step member.

Referring to FIG. 5, the upper surface of the core 1 with the side folding line 10 and the folding planes 110 formed thereon is brought into close contact with the step member 200.

Here, the core 1 wrapped in the airtight foil 100 and the step member 200 may be placed on a common plate, or the step member 200 may be placed at a predetermined height above a plate on which the core 1 wrapped in the airtight foil 100 is placed.

The step member 200 has a higher level than the front/back surface of the core 1. In a method commonly used in the art, there is a problem that the upper/lower folding line 20 is not formed at a regular location and is formed on the upper/lower surface of the core 1, resulting in formation of a step on the upper/lower surface of the core 1. In order to overcome this problem, in one embodiment of the invention, the step member 200 is employed to allow the upper/lower folding line 20 to be formed at an edge of the core 1 forming the boundary between the upper/lower surface of the core 1 and the front/back surface of the core 1. A process of forming the upper/lower folding line 20 at the edge forming the boundary between the upper/lower surface of the core 1 and the front/back surface of the core 1 using the step member 200 will be described further below.

For example, a level difference between the step member 200 and the front/back surface of the core 1 may range from 0.5 mm to 300 mm, for example, 0.5 mm to 100 mm. Within this range, the upper/lower folding line 20 can be formed at the edge forming the boundary between the upper/lower surface of the core 1 and the front/back surface of the core 1, rather than on the upper/lower surface of the core 1, as described below, without reduction in packaging efficiency.

That is, with the step member 200 having a higher level than the front/back surface of the core 1, the method according to the present invention can reduce thermal bridging by reducing the areas of the folding planes formed on the upper or lower surface of the core 1 or by preventing formation of the folding planes 110 on the upper or lower surface of the core 1. In addition, with the step member 200 having a higher level than the front/back surface of the core 1, the method according to the present invention can achieve further reliable sealing.

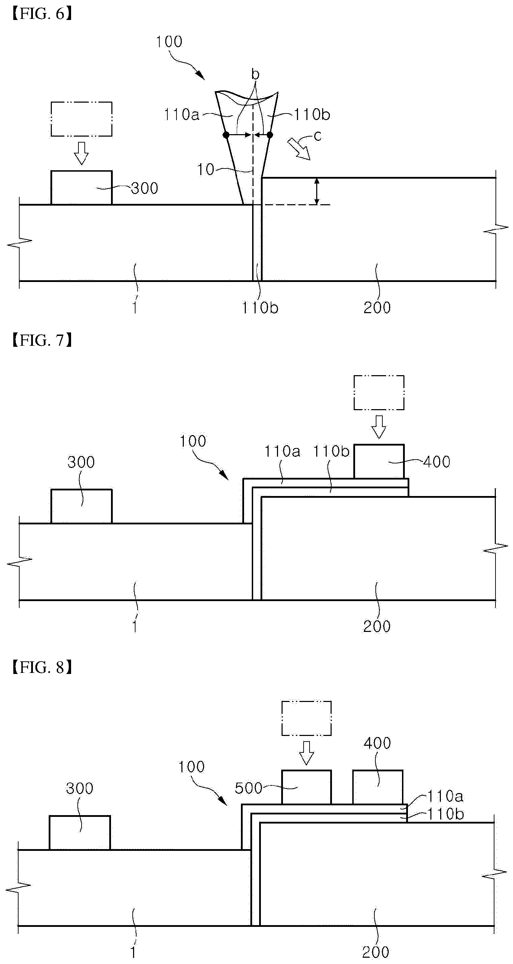

FIG. 6 is a view illustrating a configuration according to one embodiment of the present invention, in which the front surface of the core is secured by a first securing member and the remaining airtight foil over the upper/lower surface of the core is flipped onto the step member.

Referring to FIG. 6, the upper/lower surface of the core 1 is brought into close contact with the step member 200, followed by pressing and securing the front/back surface of the core 1 using the first securing member 300. Then, the folding planes 110 of the airtight foil 100 protruding between the upper/lower surface of the core 1 and the step member 200 are folded on each other in two corresponding directions with respect to the folding line, that is, in folding line directions b. Specifically, the airtight foil 100 is folded such that the second plane 110b is superimposed on the first plane 110a.

For example, when the vacuum insulation panel is packaged by an automated packaging device, a pick-up device (not shown) may be used.

Then, the folded folding planes 110 are pulled in a step member direction (c) and pressed onto the step member 200. Here, the folded folding planes 110 may be pulled to be stretched in the direction of the step member 200.

Here, if the front/back surface of the core 1 is not secured by the first securing member 300, the core 1 and/or the airtight foil 100 can be moved by at least a distance corresponding to the level difference provided by the step member 200 upon pulling the folded folding planes 110 in the step member direction (c).

In the method according to the present invention, after bringing the upper/lower surface of the core 1 into close contact with the step member 200, the front/back surface of the core 1 is pressed and secured by the first securing member 300 to prevent the core 1 from being moved upon flipping the remaining airtight foil 100 over the upper/lower surface of the core 1 onto the step member 200, thereby allowing the upper/lower folding line 20 to be formed at the edge forming the boundary between the upper/lower surface of the core 1 and the front/back surface of the core 1, rather than on the upper/lower surface of the core 1.

That is, according to the present invention, with the first securing member 300 securing the airtight foil 100 and the core 1, the airtight foil 100 can be tightly pulled and pressed onto the step member 200, thereby reducing the area of the folding planes 110 formed on the upper or lower surface of the core 1 or preventing formation of the folding planes 110 on the upper or lower surface of the core 1, and thus reducing thermal bridging. In addition, with the first securing member 300, the method according to the present invention can achieve further reliable sealing.

FIG. 7 is a view illustrating a configuration in which the remaining airtight foil over the upper/lower surface of the core is secured by a second securing member after being flipped, as shown in FIG. 6, and FIG. 8 is a view illustrating a configuration in which the remaining airtight foil over the upper/lower surface of the core is thermally bonded after being secured, as shown in FIG. 7.

Referring to FIG. 7 to FIG. 8, with the folded folding planes flipped onto the step member 200, the first plane 110a and the second plane 110b of the airtight foil 1 may be bonded, for example, welded, to each other. For example, the first plane 110a and the second plane 110b of the airtight foil 1 may be sealed by thermal bonding using a thermal bonding member 500 having a heat source.

Here, reliable sealing is required to prevent occurrence of defects upon creating vacuum at the other surface among the upper and lower surfaces of the core 1, for example, at the lower surface of the core 1.

According to the present invention, the remaining airtight foil 100 over the upper/lower surface of the core 1 is pressed and secured by a second securing member 400, thereby preventing sealing failure that can occur due to movement of the airtight foil 100 during thermal bonding.

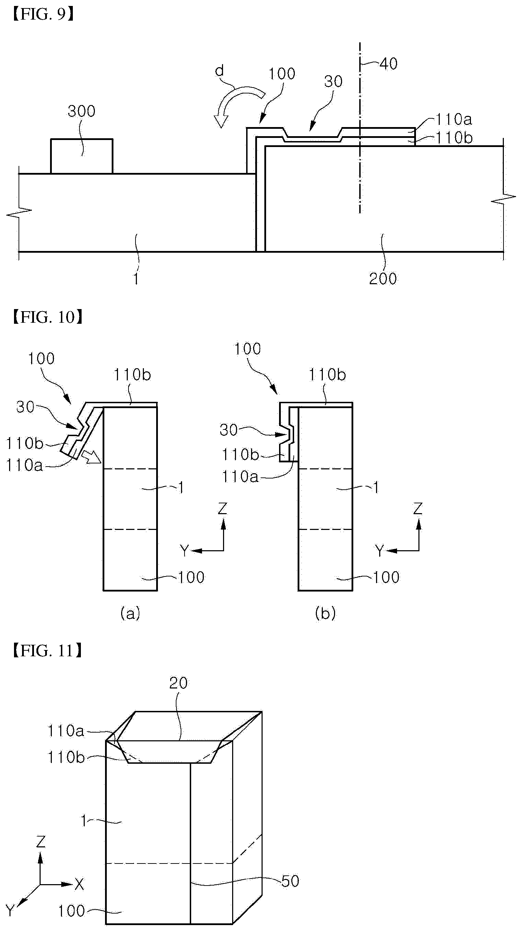

FIG. 9 is a view illustrating a configuration in which the airtight foil thermally bonded, as shown in FIG. 8, is cut at a predetermined location, and FIG. 10 is a view illustrating a configuration in which the remaining airtight foil over the upper/lower surface of the core is flipped onto the front surface of the core after being cut, as shown in FIG. 9.

Referring FIG. 9 to FIG. 10, a portion of the airtight foil 100 outside the sealed portion is cut away along a cutting line 40, and then the airtight foil 100 remaining after cutting is flipped in the forward direction (d) of the core 1. Here, a thermally bonded portion 30 is placed on the front surface of the core 1.

FIG. 11 is a perspective view of the configuration of FIG. 10(b).

Referring to FIG. 11, in the vacuum insulation panel packaged by the method according to the embodiment of the present invention, the upper/lower folding line 20 is not formed on the upper/lower surface of the core 1.

That is, the method according to the embodiment of the invention allows only the second plane 110b to be placed on the upper surface of the core 1 and allows the upper/lower folding line 20 to be formed at the edge forming the boundary between the upper surface and the front surface of the core 1, as shown in FIG. 11. Here, the upper/lower folding line 20 refers to a portion closest to the upper surface of the core 1 among a region over which the first plane 110a and the second plane 110b are superimposed on each other in FIG. 10.

Thus, the method according to the embodiment of the invention can prevent formation of a step on the upper/lower surface of the core 1, thereby improving thermal insulation performance of an insulation wall fabricated by connecting several vacuum insulation panels to one another.

FIG. 12 is a view of a vacuum insulation panel packaged according to one embodiment of the present invention.

Remaining airtight foil 100 over the upper/lower surface of the core 1 may be wrapped according to the method of packaging the vacuum insulation panel described above with reference to FIG. 3 to FIG. 11.

In the process of performing sealing to create a vacuum as shown in FIG. 9, spot sealing adapted to seal some spots of the folding planes 110 may be performed instead of sealing the entirety of the folding planes 110. That is, a vacuum may be created inside the vacuum insulation panel through an opening formed by spot sealing, followed by completion of packaging of the vacuum insulation panel.

In the final packaged vacuum insulation panel, the airtight foil 100 may be tightly wrapped around the core 1 to fit the dimensions of the core 1. In particular, the upper, lower, and side surfaces of the core 1, on which multiple vacuum insulation panels abut one another, may be flat without any step.

FIG. 13 to FIG. 15 are views of a jig according to one embodiment of the present invention.

Referring to FIG. 13 to FIG. 15, the jig 600 includes a base 610, a core insertion portion 620, a stopper 630, and a folding line-formation member 640.

As described above with reference to FIG. 3 to FIG. 4, the jig 600 may be used to push remaining airtight foil 100 over the upper/lower surface of the core 1 to form a folding line.

The core insertion portion 620, the stopper 630, and the folding line-formation member 640 may be placed on the base 610. Although the shape of the base 610 is not particularly restricted, the base 610 may have a size similar to the thickness of the core 1 to achieve a minimum footprint in a device used during a continuous packaging process.

The core insertion portion 620 serves to receive the core therein and may have a pair of sidewalls 621 to guide the side surfaces of the core 1 therealong.

The stopper 630 serves to stop movement of the core 1 guided along the core insertion portion 620 or movement of the jig 600 moved along the side surfaces of the core 1.

The folding line-formation member 640 serves to form the folding line by contacting the remaining airtight foil 100 over the upper/lower surface of the core 1.

The folding line-formation member 640 has a contact surface 641 directly contacting the airtight foil 100. A center line 642 of the contact surface is inclined at a predetermined angle β with respect to an extension direction of the side wall 621, wherein the predetermined angle β may be, for example, greater than 0° and less than 90°, for example, greater than 0° and less than or equal to 60°. In one embodiment, the predetermined angle β may be 45°. Here, the center line 642 of the contact surface may refer to a line connecting centers of upper and lower sides of the contact surface, which are parallel to each other.

In one embodiment, at least one of the core 1 wrapped in the airtight foil 100 and the jig 600 may be moved to allow the side surfaces of the core 1 wrapped in the airtight foil 100 to be guided along the core insertion portion 620 of the jig 600 until movement of at least one of the core 1 and the jig 600 is stopped by the stopper 630.

Here, the remaining airtight foil 100 over the upper/lower surface of the core 1 is pushed by the contact surface 641 of the folding line-formation member 640, whereby the folding line is formed.

Then, the vacuum insulation panel may be packaged by the method described above with reference to FIG. 5 to FIG. 12.

Although some embodiments have been described herein, it should be understood that these embodiments are provided for illustration only and are not to be construed in any way as limiting the present invention. The scope of the present invention should be defined by the appended claims.

For example, the drawings schematically show each component as a subject to aid understanding, and the thickness, length, number, and the like of each component shown in the drawings may be different from the actual ones depending on the procedure of creating the drawings. In addition, the material, shape, dimensions, and the like of each component described in the above embodiments are given for illustration only and are not to be construed in any way as limiting the present invention, and various changes can be made by those skilled in the art without substantially departing from the present invention as defined by the claims.

## Claims

1. A method of packaging a vacuum insulation panel, comprising:
(a) wrapping a core (1) in an airtight foil (100) such that upper and lower surfaces of the core are open;
(b) forming a side folding line (10) and two corresponding folding planes (110) with reference to the side folding line by pushing remaining airtight foil over the upper and lower surfaces of the core wrapped in the airtight foil inwardly of the upper and lower surfaces of the core from both sides of the core, the side folding line (10) being formed using a jig (600), the jig being guided along side surfaces of the core (1) such that at least a portion (630) of the jig contacts the upper surface of the core to stop movement of at least one of the jig and the core while at least another portion (640) of the jig contacts the airtight foil (100) to form the side folding line;
(c) bringing the upper and lower surfaces of the core into close contact with a step member (200);
(d) folding and pressing the folding planes of the airtight foil protruding between the step member and the upper and lower surfaces of the core onto the step member; and
(e) sealing the folding planes using a thermal bonding member (500).

2. The method according to claim 1, further comprising:
securing the airtight foil (110) and the core (1) by pressing front and back surfaces of the core using a first securing member (300) after bringing the upper and lower surfaces of the core into close contact with the step member (200).

3. The method according to claim 1 or 2, further comprising:
pressing and securing the folded folding planes (110) using a second securing member (400) before sealing the folding planes using the thermal bonding member (500).

4. The method according to any of claims 1 to 3, wherein, in forming the side folding line (10) and the folding planes (110), the remaining airtight foil (100) is pushed inwardly from both sides of the core (1) at an angle (α) of greater than 0° and less than 90° with respect to a front-to-rear direction of the core.

5. The method according to any of claims 1 to 4, wherein the step member (200) has a higher level than the front and back surfaces of the core (1).

6. The method according to any of claims 1 to 5, wherein the jig comprises:
a stopper (630) for stopping movement of at least one of the core and the jig; and
a folding line-formation member (640) having a contact surface (641) for contacting the airtight foil to form the side folding line.

7. The method according to claim 6, wherein the jig (600) further comprises a core insertion portion (620) having a pair of sidewalls (621) configured to receive and guide the side surfaces of the core (1).

8. The method according to claim 6 or 7, wherein the contact surface (641) of the folding line-formation member (640) is inclined at an angle (β) of greater than 0° and less than 90° with respect to a direction in which the sidewall extends.

## Patentansprüche

1. Verfahren zum Verpacken einer Vakuumisolationstafel, umfassend:
(a) Umhüllen eines Kerns (1) in einer luftdichten Folie (100), sodass die obere und untere Fläche des Kerns offen sind;
(b) Bilden einer Seitenfaltlinie (10) und von zwei entsprechenden Faltebenen (110) in Bezug auf die Seitenfaltlinie durch Schieben der verbleibenden luftdichten Folie über die obere und untere Fläche des Kerns, welches in die luftdichte Folie eingewickelt ist, nach innen von der oberen und der unteren Fläche des Kerns von beiden Seiten des Kerns, wobei die Seitenfaltlinie (10) unter Verwendung eines Gestells (600) gebildet wird, wobei das Gestell entlang von Seitenflächen des Kerns (1) geführt wird, sodass mindestens ein Abschnitt (630) des Gestells die obere Fläche des Kerns berührt, um eine Bewegung des Gestells und/oder des Kerns anzuhalten, während mindestens ein anderer Abschnitt (640) des Gestells die luftdichte Folie (100) berührt, um die Seitenfaltlinie zu bilden;
(c) Bringen der oberen und unteren Fläche des Kerns in engen Kontakt mit einem Stufenelement (200);
(d) Falten und Drücken der Faltebenen der luftdichten Folie, die zwischen dem Stufenelement und der oberen und der unteren Fläche des Kerns hervorsteht, auf das Stufenelement; und
(e) Versiegeln der Faltebenen unter Verwendung eines thermischen Klebeelements (500).

2. Verfahren nach Anspruch 1, ferner umfassend:
Befestigen der luftdichten Folie (110) und des Kerns (1) durch Drücken der Vorder- und Rückseite des Kerns unter Verwendung eines ersten Befestigungselements (300), nachdem die Ober- und die Unterseite des Kerns in engen Kontakt mit dem Stufenelement (200) gebracht wurden.

3. Verfahren nach Anspruch 1 oder 2, ferner umfassend:
Drücken und Befestigen der gefalteten Faltebenen (110) unter Verwendung eines zweiten Befestigungselement (400) vor Versiegeln der Faltebenen mit dem thermischen Klebeelement (500).

4. Verfahren nach einem der Ansprüche 1 bis 3, wobei beim Auffächern der Seitenfaltlinie (10) und der Faltebenen (110) die verbleibende luftdichte Folie (100) von beiden Seiten des Kerns (1) unter einem Winkel (α) von mehr als 0° und weniger als 90° in Bezug auf eine Vorwärts-Rückwärts-Richtung des Kerns nach innen gedrückt wird.

5. Verfahren nach einem der Ansprüche 1 bis 4, wobei das Stufenelement (200) ein höheres Niveau als die Vorder- und Rückseiten des Kerns (1) aufweist.

6. Verfahren nach einem der Ansprüche 1 bis 5, wobei das Gestell Folgendes umfasst:
einen Anschlag (630) zum Anhalten einer Bewegung von mindestens einem von dem Kern und dem Gestell; und
ein Faltlinienausbildungselement (640), das eine Kontaktfläche (641) zum Berühren der luftdichten Folie aufweist, um die Seitenfaltlinie zu bilden.

7. Verfahren nach Anspruch 6, wobei das Gestell (600) ferner einen Kerneinführungsabschnitt (620) umfasst, der ein Paar Seitenwände (621) aufweist, die konfiguriert sind, um die Seitenflächen des Kerns (1) aufzunehmen und zu führen.

8. Verfahren nach Anspruch 6 oder 7, wobei die Kontaktfläche (641) des Faltlinienausbildungselements (640) in einem Winkel (β) von mehr als 0° und weniger als 90° in Bezug auf eine Richtung geneigt ist, in der sich die Seitenwand erstreckt.

## Revendications

1. Procédé d'emballage d'un panneau d'isolation sous vide, comprenant à le fait de :
(a) envelopper un noyau (1) dans une feuille étanche à l'air (100), de sorte que les surfaces supérieure et inférieure du noyau sont ouvertes ;
(b) former une ligne de pliage latérale (10) et deux plans de pliage (110) correspondants en référence à la ligne de pliage latérale en poussant la feuille étanche à l'air résiduelle sur les surfaces supérieure et inférieure du noyau enveloppé dans la feuille étanche à l'air vers l'intérieur des surfaces supérieure et inférieure du noyau à partir des deux côtés du noyau, la ligne de pliage latérale (10) étant formée à l'aide d'un gabarit (600), le gabarit étant guidé le long des surfaces latérales du noyau (1) de sorte qu'au moins une partie (630) du gabarit est en contact avec la surface supérieure du noyau afin d'arrêter le mouvement d'au moins l'un parmi le gabarit et le noyau, alors qu'au moins une autre partie (640) du gabarit est en contact avec la feuille étanche à l'air (100) pour former la ligne de pliage latérale ;
(c) amener les surfaces supérieure et inférieure du noyau en contact étroit avec un élément de gradin (200) ;
(d) plier et comprimer les plans de pliage de la feuille étanche à l'air faisant saillie entre l'élément de gradin et les surfaces supérieure et inférieure du noyau sur l'élément de gradin ; et
(e) sceller les plans de pliage à l'aide d'un élément de liaison thermique (500).

2. Procédé selon la revendication 1, comprenant en outre à le fait de :
fixer la feuille étanche à l'air (110) et le noyau (1) en pressant les surfaces avant et arrière du noyau à l'aide d'un premier élément de fixation (300) après avoir amené les surfaces supérieure et inférieure du noyau en contact étroit avec l'élément de gradin (200).

3. Procédé selon la revendication 1 ou 2, comprenant en outre à le fait de :
presser et fixer les plans de pliage (110) pliés à l'aide d'un deuxième élément de fixation (400) avant l'étape consistant à sceller les plans de pliage à l'aide de l'élément de liaison thermique (500).

4. Procédé selon l'une quelconque des revendications 1 à 3, dans lequel, lors de la formation de la ligne de pliage latérale (10) et des plans de pliage (110), la feuille étanche à l'air (100) résiduelle est poussée vers l'intérieur à partir des deux côtés du noyau (1) à un angle (α) supérieur à 0° et inférieur à 90° par rapport à une direction avant-arrière du noyau.

5. Procédé selon l'une quelconque des revendications 1 à 4, dans lequel l'élément de gradin (200) a un plus haut niveau que les surfaces avant et arrière du noyau (1).

6. Procédé selon l'une quelconque des revendications 1 à 5, dans lequel le gabarit comprend :
une butée (630) pour arrêter le mouvement d'au moins l'un parmi le noyau et le gabarit ; et
un élément de formation de ligne de pliage (640) ayant une surface de contact (641) pour être en contact avec la feuille étanche à l'air afin de former la ligne de pliage latérale.

7. Procédé selon la revendication 6, dans lequel le gabarit (600) comprend en outre une partie d'insertion de noyau (620) ayant une paire de parois latérales (621) configurée pour recevoir et guider les surfaces latérales du noyau (1).

8. Procédé selon la revendication 6 ou 7, dans lequel la surface de contact (641) de l'élément de formation de ligne de pliage (640) est inclinée à un angle (β) supérieur à 0° et inférieur à 90° par rapport à une direction dans laquelle s'étend la paroi latérale.
